# EUROPÄISCHE PATENTSCHRIFT

(11) **EP 3 953 129 B1**
(45) Veröffentlichungstag und Bekanntmachung des Hinweises auf die Patenterteilung: **20.07.2022**
(21) Anmeldenummer: 20735359.0
(22) Anmeldetag: 28.06.2020
(51) Int. Cl.: B29B 9/16, B65G 27/32, B29B 13/02, B29B 9/06

(54) **SCHWERLAST-WIRBELRINNENVORRICHTUNG ZUR BEHANDLUNG VON KUNSTSTOFFGRANULAT, UND DARAUF BEZOGENES VERFAHREN**
HEAVY LOAD VORTEX INTERNAL APPARATUS FOR HANDLING PLASTIC GRANULAR MATERIAL, AND METHOD RELATED THERETO
APPAREIL INTERNE À VORTEX DE CHARGE LOURDE POUR MANIPULER UN MATÉRIAU GRANULAIRE EN PLASTIQUE, ET PROCÉDÉ ASSOCIÉ

(43) Veröffentlichungstag der Anmeldung: 16.02.2022
(73) Patentinhaber: Vibra Maschinenfabrik Schultheis GmbH & Co., 63075 Offenbach (DE)
(72) Erfinder: SCHULTHEIS, Winfried, 63075 Offenbach (DE)
(74) Vertreter: Beck & Rössig European Patent Attorneys
(86) Internationale Anmeldenummer: PCT/EP2020/068176
(87) Internationale Veröffentlichungsnummer: WO 2022/002341

(56) Entgegenhaltungen:
- EP-B1- 1 924 414
- CN-U- 203 794 103
- DE-A1- 2 936 541
- DE-A1-102004 042 612
- DE-A1-102015 203 654
- KR-B1- 100 725 291
- US-A- 5 628 947
- US-A1- 2007 276 119

## Beschreibung

Die Erfindung bezieht sich auf eine Wirbelrinnenvorrichtung zur Behandlung von Kunststoffgranulat nach dem Oberbegriff von Patentanspruch 1. Weiterhin bezieht sich die Erfindung auf ein Verfahren zur Kristallisation von zum Verkleben neigendem Kunststoffgranulat unter Verwendung einer solchen Wirbelrinnenvorrichtung.

Bestimmte Kunststoffgranulate werden nach der eigentlichen Granulierung einer insbesondere thermischen Nachbehandlung unterworfen, um die Struktur des Granulats zu verändern. So werden beispielsweise Polylactidgranulat (PLA-Granulat) Polytetrafluorethylengranulat (PET-Granulat) aus dem Granulierungsprozess zunächst in einem amorphen Zustand erhalten. Das amorphe Granulat wird in einem Nachbehandlungsschritt, der auch als Kristallisieren bezeichnet wird, in einen zumindest teilkristallinen Zustand überführt. Hierbei kommt es zu einer verstärkten Ausrichtung unter den Molekülketten.

Für die Kristallisation spielt die Temperaturführung eine wichtige Rolle. Zum einen muss das amorphe Granulat auf eine entsprechende Reaktionstemperatur gebracht oder auf dieser gehalten werden. Zum anderen neigen jedoch manche Granulate, wie PLA-Granulat, PET-Granulat und PU-Granulat in einer Übergangsphase zum Verkleben.

PLA-Granulat verlässt den Granulator in der Regel mit einer Temperatur im Bereich von 80° bis 120°C. Die einzelnen PLA-Granulatteilchen besitzen zunächst eine stark klebrige Oberfläche. Aufgrund der sehr eng beieinanderliegenden Glasübergangstemperatur von ca. 60° bis 80°C und Kristallisationstemperatur von etwa 90°C gestalten sich Trocknung und Kristallisation von PLA schwierig, da beim Kristallisieren ein Verkleben der Granulatteilchen untereinander vermieden werden muss.

Auch PET-Granulate sind bereits unter der für die Kristallisation erforderlichen Reaktionstemperatur, die bei etwa 80°C bis 170°C liegt, klebrig. Um eine Agglomeration der Granulatteilchen zu vermeiden, müssen diese daher während der Kristallisation bewegt werden. Die Neigung zum Verkleben nimmt mit zunehmendem Kristallisationsgrad ab.

Aus dem Stand der Technik sind eine Vielzahl von technischen Lösungen zur Kristallisation solcher Granulate bekannt.

Neuere Ansätze beruhen auf der Überlegung, das vorgetrocknete warme Granulat aus der Granulierung während eines unmittelbar nachgeschalteten Kristallisationsvorgangs einer Schwingungserregung zu unterwerfen. Durch die Schwingungsanregung wird ein Verkleben der Granulatteilchen verhindert. Gleichzeitig kann die in den Granulatteilchen gespeicherte Prozesswärme für die Kristallisation ausgenutzt werden, so dass keine Zusatzwärme benötigt wird. Im Gegensatz hierzu müssen Granulate, die beispielsweise in einem Silo zwischengespeichert werden, zum Vermeiden des Verklebens zunächst abgekühlt und anschließend für das Kristallisieren wieder erwärmt werden.

Aus EP 1 924 414 B1 ist bekannt, die Nachbehandlung des Granulats im Bereich seiner Reaktionstemperatur für die Kristallisation mithilfe einer sogenannten Wirbelrinnenvorrichtung vorzunehmen. Eine solche umfasst eine Vibrationsrinne zur Aufnahme des Granulats sowie mindestens einen Schwingungserreger zur Schwingungserregung der Vibrationsrinne. Die Schwingungserregung erfolgt mit einer deutlichen Querkomponente senkrecht zu einer Ebene, die durch die Längsrichtung der Vibrationsrinne und die Vertikalrichtung aufgespannt wird.

Diese spezielle Art der Schwingungserregung bewirkt eine schraubenförmige Bewegung des Granulats in Längsrichtung der Vibrationsrinne, welche für Wirbelrinnenvorrichtungen charakteristisch ist. Aufgrund der Schwingungserregung in Querrichtung bewegen sich die Granulatteilchen an der Seitenwand der Vibrationsrinne nach oben und rutschen dann bei Erreichen senkrechterer Wandabschnitte über den nachfolgend ansteigenden Granulatteilchen in die Rinne zurück. Hierdurch entsteht ein ununterbrochener, kontinuierlicher Granulatstrom mit hoher Interaktion der Granulatteilchen untereinander, so dass diese Prozesswärme untereinander austauschen können. Auf diese Weise wird nicht nur ein sehr enges Verweilzeitspektrum der Granulatteilchen in der Kristallisationsstufe erzielt, sondern zugleich auch ein sehr homogenes Temperaturprofil, was sich vorteilhaft auf die Produktqualität auswirkt. Mit herkömmlichen Schwingförderern, Siebmaschinen oder Schneckenfördern lässt sich ein solcher Effekt nicht erzielen, da eine schraubenförmige Bewegung des Granulats mit hoher Interaktion der Granulatteilchen dort nicht möglich ist.

Die in EP 1924414 B1 vorgeschlagene Wirbelrinnenvorrichtung nach dem Oberbegriff von Patentanspruch 1, welche auf die Anmelderin des vorliegenden Patents zurückgeht, ist konstruktionsbedingt lediglich für relative kleine Produktdurchsatzmengen geeignet und daher keine Schwerlast-Wirbelrinnenvorrichtung. Aufgrund der für die Erzeugung der Schraubenbewegung des Produkts erforderlichen Querkomponente kommt es bei ansteigender Produktmenge zu hohen Massenkräften quer zur Vertikalrichtung und Längsrichtung der Vibrationsrinne.

Aus US 2007/0276119A1 sind eine weitere Vibrationsrinne und ein weiteres Verfahren zum Kristallisieren von Kunststoffgranulat bekannt, wobei eine spiralförmige Bewegung zum Fördern des Kunststoffgranulats zum Einsatz kommt.

Der vorliegenden Erfindung liegt die Aufgabe zugrunde, mit einer Wirbelrinnenvorrichtung höhere Produktdurchsatzmengen bei der Kristallisation von Kunststoffgranulaten zu erzielen.

Diese Aufgabe wird durch eine Schwerlast-Wirbelrinnenvorrichtung gemäß Patentanspruch 1 gelöst. Diese umfasst eine Vibrationsrinne zur Aufnahme von Kunststoffgranulat, welche einen Rinnenboden und zwei einander gegenüberliegende Seitenwände aufweist, wobei die Länge der Vibrationsrinne in Längsrichtung größer ist, als die maximale Höhe und Breite eines zur Längsrichtung senkrechten Rinnenquerschnitts; mindestens zwei Schwingungserreger zur Erzeugung einer Schwingungserregung, welche eine Querkomponente senkrecht zu einer durch die Längsrichtung und Vertikalrichtung gebildeten Ebene aufweist; und mindestens zwei Rinnenträger, die in Längsrichtung der Vibrationsrinne voneinander beabstandet sind, jeweils den Rinnenboden und die Seitenwände von außen abstützen und ferner die Vibrationsrinne an der dem Rinnenboden gegenüberliegenden Seite überbrücken; wobei an mindestens zwei der Rinnenträger jeweils ein Schwingungserreger befestigt ist.

Mit einer solchen Konfiguration ist es erstmals möglich, Produktmengen mit einer Masse von 3 bis 10t ohne Einbußen bei der Produktqualität zu behandeln. Dabei sind Beschleunigungen von 30 bis 60 kgm/s² realisierbar.

Durch die besondere Ausgestaltung der Rinnenträger lassen sich die hohen Massenkräfte in Querrichtung gut beherrschen.

Vorteilhafte Ausgestaltungen der Erfindung sind Gegenstand weiterer Patentansprüche.

So können für eine besonders stabile Ausführung die Rinnenträger jeweils einen geschlossenen Ring bilden, welcher die Vibrationsrinne radial umgibt.

Vorzugsweise tritt die Vibrationsrinne im Wesentlichen senkrecht durch die Rinnenträger hindurch, so dass die Längsrichtung der Vibrationsrinne mit der Haupterstreckungsebene des jeweiligen Rinnenträgers einen kleinsten Winkel im Bereich von 75° bis 88° einschließt. Die Rinnenträger versteifen die Vibrationsrinne somit im Wesentlichen in der Ebene ihres Querschnitts.

In einer Ausführungsvariante ist die Haupterstreckungsebene des Rinnenträgers eine Vertikalebene, welche sich im Wesentlichen quer zur Längsrichtung der Vibrationsrinne erstreckt. Mehrere Rinnenträger können in Längsrichtung der Vibrationsrinnen parallel zueinander aufgestellt werden.

In einer weiteren Ausführungsvariante weist der Rinnenträger eine einstückige Trägerplatte mit konstanter Wanddicke auf, in welcher eine Durchtrittsöffnung für die Vibrationsrinne ausgebildet ist. Eine solche Platte lässt sich mit geringem Aufwand herstellen. Sie kann gegebenfalls an ihrem Rand durch Gurtbleche zusätzlich ausgesteift werden.

Weiterhin kann der Rinnenboden der Vibrationsrinne in Längsrichtung von einem Zufuhrende zu einem Austrittsende hin abfallend geneigt sein. Dies begünstigt den Transport von Granulat in Längsrichtung durch die Vibrationsrinne. Vorzugsweise wird der Produkttransport allein durch die Neuzufuhr am Zufuhrende bewirkt, kann jedoch gegebenfalls auch schwingungstechnisch unterstützt werden. Die Hautschwingungserregungskomponente bleibt jedoch in Querrichtung ausgerichtet. Hohe Beschleunigungen von Granulatteilchen in Längsrichtung werden vermieden.

In einer bevorzugten Ausführungsvariante ist der Rinnenboden der Vibrationsrinne in Längsrichtung mit einem Winkel im Bereich von 2° bis 15° zur Horizontalebene geneigt.

Gemäß einer weiteren Ausführungsvariante ist der Rinnenquerschnitt zwischen einem Zufuhrende und einem Austrittsende der Vibrationsrinne frei von Stauwehren. Dies begünstigt die Durchmischung im Produktstrom und ist für eine homogene Produktqualität von Vorteil.

Die Rinnenträger können in eine käfigartige Gehäusestruktur einbezogen sein, welche einerseits eine hohe Steifigkeit besitzt, andererseits jedoch einen geringen Materialeinsatz erfordert und dadurch verhältnismäßig leicht ist. Hierzu sind gemäß einer weiteren Ausführungsvariante benachbarte Rinnenträger durch mindestens drei Längstraversen in Längsrichtung der Vibrationsrinne untereinander verbunden.

Es hat sich ferner gezeigt, dass die Kraftwirkungsrichtung der Schwingungserregung gerade bei hohen Produktmassen in der Vibrationsrinne eine wichtige Rolle spielt. Vorzugsweise sind auch mit Blick auf die Gesamthöhe und Abstützung der erfindungsgemäßen Vorrichtung die Schwingungserreger oberhalb der Vibrationsrinne und dort vorzugsweise in einem Bereich über oder seitlich außen neben einer der Seitenwände derart angeordnet, dass die Kraftwirkungslinie der Schwingungserregung des jeweiligen Schwingungserregers mit einem Abstand von maximal 20% und bevorzugt maximal 10% der Breite der Vibrationsrinne zwischen den Seitenwänden zur Oberkante der schwingungserregerseitigen Seitenwand verläuft. Die obenliegende Anordnung der Schwingungserreger ermöglicht zudem ein einfaches thermisches Isolieren der Vibrationsrinne von unten.

Vorzugsweise ist die Kraftwirkungslinie der Schwingungserregung des jeweiligen Schwingungserregers derart ausgerichtet und auf die Breite der Vibrationsrinne abgestimmt, dass diese den Rinnenboden vor der Mitte des Rinnenbodens in Querrichtung der Vibrationsrinne schneidet.

In einer weiteren Ausführungsvariante schließt die Kraftwirkungslinie der Schwingungserregung des jeweiligen Schwingungserregers in einer die Querrichtung einschließenden Vertikalebene mit dem Rinnenboden vorzugsweise einen Winkel im Bereich von 25° bis 50° ein. Zu flache und zu steile Winkel verhindern das gewünschte Ansteigen der Granulatteilchen an der Seitenwand und die Ausbildung einer ausgeprägten Schraubenbewegung bzw. eines Wirbels in der Vibrationsrinne.

Zur Begünstigung der Schraubenbewegung von Granulat in der Vibrationsrinne weist der Rinnenboden in der Ebene des Rinnenquerschnitts einen geraden Abschnitt auf, der zu einer Horizontalen in der Ebene des Rinnenquerschnitts von dem Schwingungserreger weg abfallend geneigt ist, insbesondere zur Horizontalen mit einem Winkel von 2° bis 15° geneigt sein kann.

Bei größeren Rinnenbreiten kann der gerade Abschnitt durch eine oder mehrere in Längsrichtung der Vibrationsrinne verlaufende Sicken in zwei oder mehr gerade Teilabschnitte unterteilt sein. Die durchschnittliche Gesamtneigung bleibt dabei vorzugsweise im vorstehend genannten Rahmen von 2° bis 15°.

In diesem Zusammenhang ist es weiter von Vorteil, wenn die Seitenwände der Vibrationsrinne jeweils über einen Krümmungsabschnitt in den Rinnenboden übergehen, wobei der Krümmungsradius des Krümmungsabschnitts auf der Seite der Schwingungserreger größer ist als der Krummungsradius des Krümmungsabschnitts auf der gegenüberliegenden Seite. Durch den verringerten Krümmungsradius auf der den Schwingungserregern abgewandten Seite wird zudem das nutzbare Fassungsvolumen der Vibrationsrinne erhöht.

Bevorzugt ist das Verhältnis des Krümmungsradius des Krümmungsabschnitts auf der Seite der Schwingungserreger zu dem Krümmungsradius des Krümmungsabschnitts auf der gegenüberliegenden Seite größer als 2 und weiter bevorzugt größer als 5.

Ferner sollte das Verhältnis des Krümmungsradius des Krümmungsabschnitts auf der Seite der Schwingungserreger zur Breite der Vibrationsrinne zwischen den Seitenwänden möglichst kleiner als 0,3 und größer als 0,1 gewählt werden.

Wie bereits erwähnt, soll der der Krümmungsradius des Krümmungsabschnitts auf der Seite der Schwingungserreger größer, insbesondere deutlich größer als der Krümmungsradius des Krümmungsabschnitts auf der gegenüberliegenden Seite sein. In einer weiteren Ausführungsvariante ist dieser größere Krümmungsradius so gewählt, dass dieser mindestens ein Viertel der größten Trogtiefe der Vibrationsrinne, d.h. der Höhe der Vibrationsrinne gemessen an der Innenseite derselben, beträgt.

Die Sollbefüllung der Vibrationsrinne ist größer als 50% des Rinnenquerschnitts.

Die vorstehend erläuterte Schwerlast-Wirbelrinnenvorrichtung eignet sich insbesondere zur Durchführung eines Verfahrens zur Kristallisation von zum Verkleben neigendem Kunststoffgranulat gemäß Patentanspruch 15. Dieses beinhaltet ein Beschicken der Vibrationsrinne nach einem der vorgenannten Ansprüche mit Kunststoffgranulat, welches bei Zufuhr eine Temperatur oberhalb seiner Glasübergangstemperatur im Bereich seiner Reaktionstemperatur für die Kristallisation aufweist, sowie ein Erregen der Vibrationsrinne mittels der Schwingungserreger derart, dass das Kunststoffgranulat in der Vibrationsrinne einer schraubenförmigen Bewegung unterworfen wird, wobei die Verweilzeit des Kunststoffgranulats in der Vibrationsrinne 20 bis 60 min. beträgt und die Vibrationsrinne über mindestens 50% ihres Querschnitts befüllt ist. Die Zufuhr von Granulat erfolgt dabei bevorzugt kontinuierlich. Jedoch ist auch ein batchweiser Betrieb möglich.

Nachfolgend wird die Erfindung anhand eines in der Zeichnung dargestellten Ausführungsbeispiels näher erläutert. Die Zeichnung zeigt in:
- Fig. 1: eine räumliche Darstellung einer Schwerlast-Wirbelrinnenvorrichtung nach einem Ausführungsbeispiel der Erfindung,
- Fig. 2: eine weitere räumliche Darstellung der Schwerlast-Wirbelrinnenvorrichtung gemäß Fig. 1,
- Fig. 3: eine Schnittansicht der Schwerlast-Wirbelrinnenvorrichtung gemäß Fig. 1, und in
- Fig. 4: eine Detailansicht des Rinnenbodens einer Ausführungsvariante mit einem gesickten geraden Abschnitt.

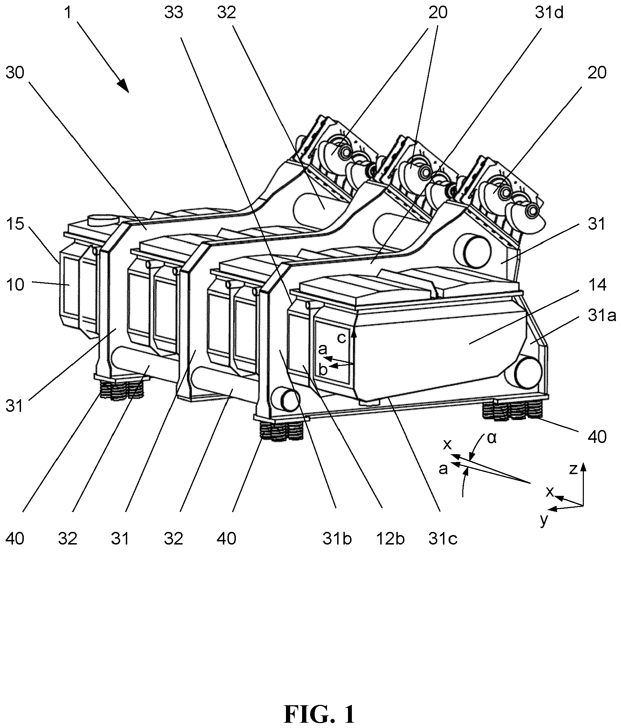

Das Ausführungsbeispiel in den Figuren 1 bis 3 zeigt eine zur Kristallisation von KunststoffGranulat geeignete und konfigurierte Vorrichtung in Form einer Schwerlast-Wirbelrinnenvorrichtung 1. Das technische Prinzip einer Wirbelrinne, welches vorliegend zugrundegelegt wird, ist in EP 1924414 B1 erläutert, deren diesbezüglicher Inhalt ausdrücklich in die vorliegende Offenbarung miteinbezogen wird.

In den Figuren sowie in den nachfolgenden Erläuterungen wird auf ein kartesisches Koordinatensystem xyz Bezug genommen, in welchem x eine horizontale Achse, y eine horizontale Achse orthogonal zu x und z eine Vertikalachse orthogonal zu x und y darstellt. Die Vertikalachse z fällt mit der Schwerkraftrichtung zusammen. Die x- und y-Achse spannen folglich eine Horizontalebene xy senkrecht zur Schwerkraftrichtung auf.

Für die Schwerlast-Wirbelrinnenvorrichtung wird ferner auf ein weiteres kartesisches Ortskoordinatensystem abc Bezug genommen, in welchem a eine Längsachse der Vorrichtung, b eine hierzu orthogonale Querrichtung der Vorrichtung und c eine Hochrichtung orthogonal zu a und b definiert. Die Querrichtung b fällt mit der y-Achse zusammen. Sofern nachfolgend von einer Querrichtung die Rede sein wird, ist diese wie vorstehend definiert zu verstehen. Die Längsachse a kann mit der x-Achse und die Hochrichtung c mit der z-Achse zusammenfallen. In der Regel sind die Längsachse a und die Hochrichtung z zu den korrespondierenden Achsen x und z jedoch etwas geneigt, wie dies weiter unten noch näher erläutert werden wird.

Die erfindungsgemäße Schwerlast-Wirbelrinnenvorrichtung 1 umfasst zunächst eine Vibrationsrinne 10 zur Aufnahme von Kunststoffgranulat. Die Vibrationsrinne 10 ist in der Art eines länglichen Trogs mit einem im Wesentlichen U-förmigen Querschnittsprofil ausgeführt. Sie weist dementsprechend einen Rinnenboden 11 und zwei einander gegenüberliegende Seitenwände 12a und 12a auf, welche durch den Rinnenboden 11 miteinander verbunden sind.

Vorzugsweise ist das Querschnittsprofil über die Länge der Vibrationsrinne 10 konstant. Zudem ist diese zwischen ihren Enden in Längsrichtung a frei von Stauwehren.

Die Seitenwände 12a und 12b können im Wesentlichen parallel zueinander ausgerichtet sein und weisen in Längsrichtung einen konstanten Abstand zueinander auf, welche bevorzugt in einem Bereich von 1000 bis 3000 mm und weiter bevorzugt von 1500 bis 2500mm liegt. Sie erstrecken sich in Längs- und Hochrichtung a und c der Vibrationsrinne.

Die Seitenwände 12a und 12b gehen jeweils über einen Krümmungsabschnitt 13a bzw. 13b in den Rinnenboden 11 über.

Der Rinnenboden 11 kann grundsätzlich als im Wesentlichen ebene Fläche in der Horizontalebene xy ausgeführt sein. Vorzugsweise ist dieser jedoch in Längsrichtung a und/oder in Querrichtung b der Vibrationsrinne 10 etwas geneigt.

So kann der Rinnenboden 11 der Vibrationsrinne 10 in Längsrichtung a von einem Zufuhrende 14 zu einem Austrittsende 15 der Vibrationsrinne 10 hin abfallend geneigt sein, um den Durchtritt von Granulat von dem Zufuhrende 14 zu dem Austrittsende 15 zu begünstigen. Dies ist insbesondere dann der Fall, wenn der Vorschub von Granulat in der Vibrationsrinne 10 allein und ausschließlich durch die Zufuhr von Granulat in die Vibrationsrinne 10, d.h. ohne fördernde schwingungstechnische Unterstützung bewerkstelligt werden soll. In Abwandlung hiervon kann ein Vorschub von Granulat in Längsrichtung a jedoch auch schwingungstechnisch erzeugt werden. Letzteres beinhaltet zudem die Möglichkeit, die Vorschubrichtung des Granulats in der Vibrationsrinne 10 umzukehren.

Die Neigung in Längsrichtung a erfolgt vorzugsweise mit einem Winkel α im Bereich von 2° bis 15° zur Horizontalebene xy. Bezogen auf die oben definierten Koordinatensysteme bedeutet dies, dass die Längsachse a zur x-Achse und den genannten Winkel α angestellt ist.

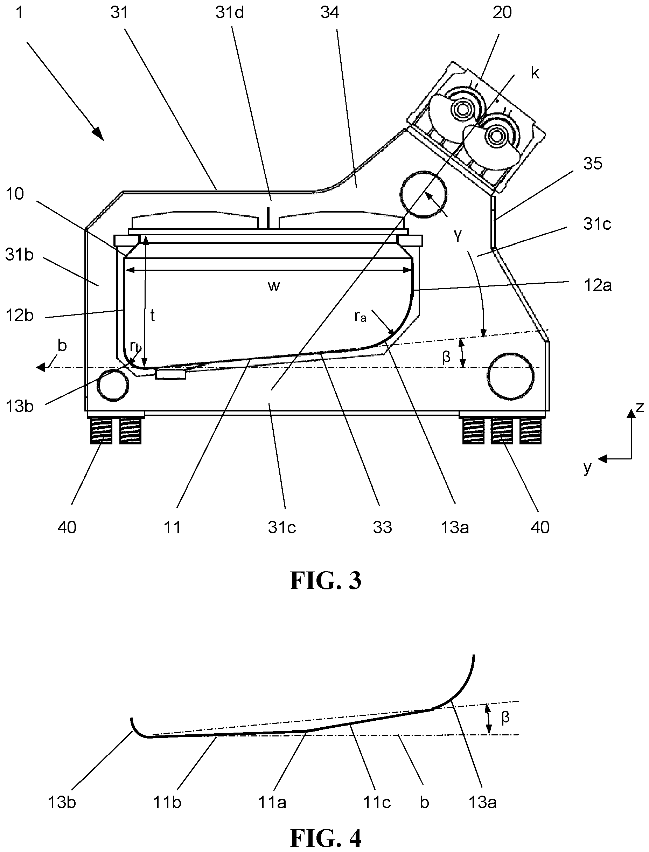

Die Neigung des Rinnenbodens 11 in Querrichtung b ist in Fig. 3 angedeutet. Der Rinnenboden 11 weist in der Ebene des Rinnenquerschnitts, d.h. einer Ebene bc, einen geraden Abschnitt auf, der zu einer Horizontalen b in der Ebene bc des Rinnenquerschnitts von der ersten Seitenwand 12a zur der zweiten Seitenwand 12b abfallend geneigt ist. Vorzugsweise ist der gerade Abschnitt des Rinnenbodens 11 insbesondere zur Horizontalen b mit einem Winkel β von 2° bis 15° geneigt. Der Rinnenboden 11 stellt somit in Querrichtung b der Vibrationsrinne 10 eine schiefe Ebene dar.

In einer Abwandlung des Ausführungsbeispiels ist der gerade Abschnitt des Rinnenbodens 11 durch eine oder mehrere in Längsrichtung a der Vibrationsrinne 10 verlaufende Sicken 11a in zwei oder mehr gerade Teilabschnitte 11b, 11c unterteilt, welche zueinander angewinkelt sind. Fig. 4 zeigt beispielhaft den Querschnitt eines gesickten Rinnenbodens 11 mit zwei geraden Teilabschnitten 11b und 11c. Die durchschnittliche Gesamtneigung β, die zwischen dem Übergang des Rinnenbodens 11 in die Krümmungsabschnitte 13a bzw. 13b gemessen wird, bleibt dabei vorzugsweise im Bereich von 2° bis 15°. Durch das Sicken des Rinnenbodens 11 wird ein Versteifungseffekt erzielt.

Die Seitenwände 12a und 12b der Vibrationsrinne 10 gehen, wie bereits erwähnt, jeweils über einen Krümmungsabschnitt 13a und 13b in den Rinnenboden 11 über. Dabei ist, wie in Fig. 3 ebenfalls angedeutet, der Krümmungsradius rₐ des Krümmungsabschnitts 13a auf einer Seite größer als der Krümmungsradius r_{b} des Krümmungsabschnitts 13b auf der gegenüberliegenden Seite. Im Bereich des Krümmungsabschnitts 13a der erstgenannten Seite erfolgt im Granulat die Wirbelbildung. Der kleinere Krümmungsradius r_{b} auf der gegenüberliegenden Seite ist für ein großes Füllvolumen der Vibrationsrinne 10 von Vorteil, wodurch ein hoher Produktdurchsatz erzielt werden kann.

Der größere Krümmungsradius rₐ ist so gewählt, dass dieser mindestens ein Viertel der größten Trogtiefe t der Vibrationsrinne 10, d.h. der Höhe der Vibrationsrinne 10 gemessen an der Innenseite derselben, beträgt.

Vorzugsweise ist das Verhältnis des Krümmungsradius rₐ des Krümmungsabschnitts 13a auf der erstgenannten Seite zu dem Krümmungsradius r_{b} des Krümmungsabschnitts 13b auf der gegenüberliegenden Seite größer als 2, weiter bevorzugt größer als 5.

Besonders zweckmäßige Krümmungsradien rₐ für den Krümmungsabschnitt 13a auf der erstgenannten Seite liegen im Bereich von 180 bis 450mm bei einer Rinnenbreite von 1800mm.

In Bezug auf die lichte Weite w der Vibrationsrinne 10 zwischen den Seitenwänden12a und 12b, d.h. deren Erstreckung in Querrichtung b bzw. y ist das das Verhältnis des Krümmungsradius rₐ des Krümmungsabschnitts 13a auf der erstgenannten Seite zur Breite der Vibrationsrinne 10 vorzugsweise kleiner als 0,25 und/oder größer als 0,1.

Üblicherweise wird die lichte Weite w größer als die Trogtiefe t gewählt.

Die erfindungsgemäße Vorrichtung 1 umfasst weiterhin mindestens zwei Schwingungserreger 20 zur Erzeugung einer Schwingungserregung an der Vibrationsrinne 10, wobei die Schwingungserregung eine Komponente in Querrichtung b bzw. y aufweist. Diese Querkomponente der Schwingungserregung ist im Zusammenspiel mit der Ausbildung des Querschnittsprofils der Vibrationsrinne 10 für die die Bildung einer wirbel- oder schraubenförmigen Bewegung des Granulats um eine zur Längsrichtung a parallelen Achse in der Vibrationsrinne 10 maßgeblich. Zudem kann die Schwingungserregung eine Komponente in Vertikalrichtung z bzw. Hochrichtung c enthalten. Der Anteil in Längsrichtung a bzw. in Richtung der x-Achse ist demgegenüber vernachlässigbar.

Die Schwingungserreger 20 können beispielsweise als Richterreger ausgeführt sein, welche miteinander gekoppelt sind, so dass die Erregung durch alle Schwingungserreger 20 synchron erfolgt. Jedoch kommen auch andere Erregertypen in Frage.

Die Schwingungserreger 20 sind nicht unmittelbar an der Vibrationsrinne 10 befestigt, sondern vielmehr an einer nachfolgend näher erläuterten, käfigartig ausgebildeten Gehäusestruktur 30, welche die Vibrationsrinne 10 trägt.

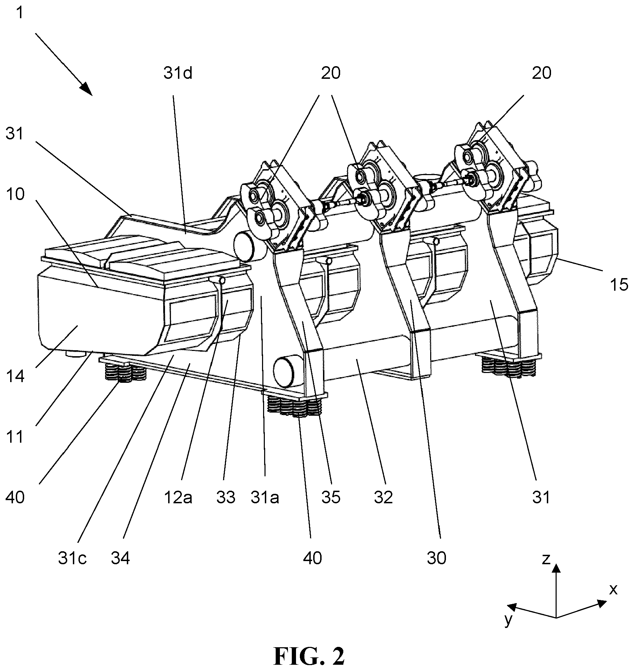

Die Gehäusestruktur 30 basiert auf zwei oder mehr Rinnenträgern 31, die vorzugsweise parallel, d.h. in Längsrichtung a der Vibrationsrinne 10 aufeinanderfolgend angeordnet sind. Dabei sind die Rinnenträger 31 jeweils untereinander beabstandet, wie dies in den Fig. 1 und 2 gut zu erkennen ist. Die Rinnenträger 31 sind als zunächst separate Bauteile herstellbar. Vorliegend sind beispielhaft drei Rinnenträger 31 dargestellt. Jedoch kann deren Anzahl je nach Länge der Vibrationsrinne 10 auch kleiner oder größer gewählt werden.

Die Gehäusestruktur 30 weist ferner Längstraversen 32 auf, durch welche benachbarte Rinnenträger 31 miteinander starr verbunden sind. Vorliegend sind drei Längstraversen 32 vorgesehen, welche sich seitlich der Vibrationsrinne 10 vorzugsweise in x-Richtung erstrecken, um zumindest zwei benachbarte Rinnenträger 31 oder gegebenenfalls auch alle Rinnenträger 31 zu verbinden. Die Längstraversen 32 können stab- oder stangenförmig ausgebildet sein. In einer Ausführungsvariante weisen diese ein konstantes Querschnittsprofil auf. Insbesondere können die Längstraversen 32 auch als Hohlprofile ausgebildet sein.

Die Gehäusestruktur 30 stützt sich über Federn 40 gegen einen Untergrund ab. Die Federn 40 sind vorzugsweise an zumindest einigen der Rinnenträger 31 angeordnet.

Die Schwingungserreger 20 sitzen vorzugsweise oberhalb der Vibrationsrinne 10 auf den Rinnenträgern 31 vorzugsweise über der Seitenwand 12a der erstgenannte Seite oder aber etwas seitlich außen davon.

Im Hinblick auf die gleichzeitige Verarbeitung großer Granulatmassen in der Größenordnung von 3 bis 10t in der Vibrationsrinne 10 sind die Rinnenträger 31 in besonderer Art und Weise ausgeführt.

Der Querschnitt eines Rinnenträgers 31 ist in Fig. 3 gut zu erkennen. Der Rinnenträger 31 ist mit der Vibrationsrinne 10 starr verbunden. Insbesondere weist der Rinnenträger 31 zwei Vertikalstreben 31a und 31b auf, welche sich von einem unteren Sockelabschnitt 31c vertikal nach oben erstrecken. Die Vertikalstreben 31a und 31b sind durch einen Bügelabschnitt 31d miteinander verbunden, so dass zwischen den genannten Abschnitten 31a bis 31d eine Durchtrittsöffnung 33 für die Vibrationsrinne 10 gebildet wird. Der Rinnenträger 31 weist seine wesentliche Ausdehnung in Richtung der y- und z-Achse auf, d.h. seine Erstreckung in x-Richtung ist hierzu vergleichsweise klein, so dass dieser als scheiben- oder plattenförmig bezeichnet werden kann.

Wie in den Fig. 1 bis 3 zu erkennen, stützt der Rinnenträger 31 den Rinnenboden 11 und die Seitenwände 12a und 12b der Vibrationsrinne 10 von außen ab. So liegen die Vertikalstreben 31a und 31b außenseitig gegen die Seitenwände 12a und 12b der Vibrationsrinne an. Gleichermaßen liegt der Rinnenboden 11 auf dem unteren Sockelabschnitt 31c auf.

Ferner überbrückt der Rinnenträger 31 die Vibrationsrinne 10 an der dem Rinnenboden 11 gegenüberliegenden Seite. Der Bügelabschnitt 31d, welcher die Vertikalstreben 31a und 31b miteinander verbindet, verläuft entsprechend oberhalb der Vibrationsrinne 10 in Querrichtung b bzw. y.

Die Rinnenträger 31 bilden vorliegend jeweils einen geschlossenen Ring, welcher die Vibrationsrinne 10 radial umgibt.

Die Vibrationsrinne 10 tritt hierbei in etwa senkrecht durch die Rinnenträger 31 hindurch, d.h. die Längsrichtung a der Vibrationsrinne 10 schließt mit der Haupterstreckungsebene xy des jeweiligen Rinnenträgers 31 einen kleinsten Winkel im Bereich von 75° bis 90° ein.

Hierdurch wird eine sehr stabile Lagerung der Vibrationsrinne 10 an der Gehäusestruktur 30 erzielt, welche ihrerseits vergleichsweise leicht ausgeführt werden kann. Insbesondere wird einem etwaigen Aufweiten oder Atmen der Vibrationsrinne 10 in Querrichtung b begegnet.

In einer Ausführungsvariante weisen die Rinnenträger 31 jeweils eine einstückige Trägerplatte 34 mit konstanter Wanddicke auf, in welcher die Durchtrittsöffnung 33 für die Vibrationsrinne 10 ausgebildet ist. Durch an die Außenkanten der Trägerplatte 34 angeschweißte Gurtbleche 35 kann eine zusätzliche Aussteifung recht einfach erzielt werden.

Anstelle einer einstückigen Trägerplatte 34 kann die die Vibrationsrinne 10 unmittelbar abstützende Ringstruktur eines Rinnenträgers 31 auch aus mehreren Einzelteilen zusammengefügt, insbesondere geschweißt sein.

Ferner ist es möglich, einen Rinnenträger 31 als Gussteil herzustellen.

Die Schwingungserreger 20 sind an den Rinnenträgern 31 oberhalb der Vibrationsrinne 10 in einem Bereich über oder seitlich außen neben einer der Seitenwände 12a derart angeordnet, dass die Kraftwirkungslinie k der Schwingungserregung des jeweiligen Schwingungserregers 20 mit einem Abstand von maximal 20%, vorzugsweise maximal 10% der Weite w der Vibrationsrinne 10 zwischen den Seitenwänden 12a und 12b zur Oberkante 12c der schwingungserregerseitigen Seitenwand 12a verläuft.

Die Kraftwirkungslinie k der Schwingungserregung des jeweiligen Schwingungserregers 20 schneidet den Rinnenboden 11 vorzugsweise vor der Mitte des Rinnenbodens 11 in Querrichtung b bzw. y der Vibrationsrinne 10. Dies begünstigt die Wirbelbildung im Bereich des weicher gekrümmten schwingungserregerseitigen Krümmungsabschnitts 13a der Vibrationsrinne 10 und sorgt für eine Vielzahl von Kollisionen zwischen den zu behandelnden Granulatteilchen.

Ferner schließt die Kraftwirkungslinie k der Schwingungserregung des jeweiligen Schwingungserregers 20 einer die Querrichtung b bzw. y einschließenden Vertikalebene yz mit dem Rinnenboden 11 einen Winkel γ im Bereich von 25° bis 50° ein.

Mit der vorstehende Schwerlast-Wirbelrinnenvorrichtung 1 lassen sich Granulatmassen von 3 bis 10t ohne Einbußen bei der Produktqualität gleichzeitig behandeln, wobei Beschleunigungswerte im Bereich von 30 bis 60 kgm/s² möglich sind, die dafür sorgen, dass die Granulatteilchen nicht miteinander verkleben.

Die Sollbefüllung der Vibrationsrinne 10 kann dabei größer als 50% des Rinnenquerschnitts sein, d.h. es wird eine gute Ausnutzung des Behandlungsraums für das Granulat erzielt.

Die Rinnenträger 31 sind aufgrund des radialen Umfassens der trogförmigen Vibrationsrinne 10 besonders geeignet, die in Richtung der y-Achse, quer zur Produktflussrichtung eingeleiteten Kräfte aufzunehmen. Diese Kräfte werden bei großer Produktfüllung sehr hoch und können durch die dynamische Erregung des Produktes und insbesondere eine nicht auszuschließenden Klumpenbildung im Produkt in ihrer Wirkung noch zusätzlich verstärkt werden.

Erreichbare Breiten der Vibrationsrinne 10 liegen bei etwa 1000 bis 3000 mm. Dabei sind Baulängen von 5000 bis 10000 mm möglich.

Dies trägt dem Umstand Rechnung, dass bei bestimmten Kunststoffen zunehmend höhere Leistungen, d.h. Produktvolumina bei annähernd gleichbleibender Verweilzeit erwünscht sind, die seriell einzusetzende Anzahl an Vibrationsrinnen aus aufstellungstechnischen und Kostengründen jedoch möglichst auf maximal drei Wirbelrinnenvorrichtungen begrenzt bleiben soll.

Der Aufbau der die Vibrationsrinne 10 tragenden Gehäuse struktur 30 aus mehreren vorzugsweise scheibenförmigen Rinnenträgern 31, welche jeweils die trogförmige Vibrationsrinne 10 radial umfassen und gleichzeitig die durch die Schwingungserreger 20 eingeleiteten Kräfte aufnehmen, bleibt trotz der Fähigkeit, die hohen Querkräfte abzustützen, vergleichsweise leicht und in der Herstellung günstig.

Die vorstehend erläuterte Schwerlast-Wirbelrinnenvorrichtung 1 eignet sich insbesondere zur Durchführung eines Verfahrens zur Kristallisation von zum Verkleben neigendem Kunststoffgranulat, wie beispielsweise PLA, PET oder PU. Hierzu wird die Vibrationsrinne 10 der Schwerlast-Wirbelrinnenvorrichtung 1 mit Kunststoffgranulat beschickt, welches bei Zufuhr bereits erwärmt ist, d.h. insbesondere eine Temperatur oberhalb seiner Glasübergangstemperatur im Bereich seiner Reaktionstemperatur für die Kristallisation aufweist.

Insbesondere kann das Rohgranulat im Hinblick auf die Einsparung von Energie unmittelbar aus einer Granuliervorrichtung übernommen werde, ohne dass dieses vorher abgekühlt werden müsste. Dies bedeutet allerdings, dass bei beschränkten Raumverhältnissen genügend Platz für die anschließende Wirbelrinne bzw. Wirbelrinnen vorhanden sein muss, weswegen eine kompakte Ausführung, welche große Durchsätze ermöglicht, von großer Bedeutung ist.

Das Erregen der Vibrationsrinne 10 erfolgt mittels der räumlich vorteilhaft an die Rinnenträger 31 angebauten Schwingungserreger 20 derart, dass das Kunststoffgranulat in der Vibrationsrinne 10 einer schrauben- oder wirbeiförmigen Bewegung unterworfen wird, so dass sich eine gute Durchmischung im Granulat ergibt. Dies hat wiederum zur Folge, dass das Temperaturprofil für alle Granulatteilchen sehr gleichmäßig bleibt, d.h. alle Granulatteilchen weitestgehend unter gleichen Bedingungen behandelt werden, so dass sich eine sehr homogene Produktqualität einstellt.

Die Verweilzeit des Kunststoffgranulats in der Vibrationsrinne 10 unter Schwingungserregung beträgt üblicherweise 20 bis 60 min., wenn die Vibrationsrinne mit etwa 50% ihres Querschnitts oder mehr befüllt ist. Am Ende der Verweilzeit ist die Kristallisation soweit fortgeschritten, dass die Granulatteilchen nicht mehr klebrig sind, so dass diese entweder fertig abgefüllt werden oder in weiteren Einrichtungen auf höhere Kristallisationsgrade aufkristallisiert werden können.

Die Erfindung wurde vorstehend anhand eines möglichen Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel beschränkt, sondern umfasst alle durch die Patentansprüche definierten Ausgestaltungen.

## Patentansprüche

1. Schwerlast-Wirbelrinnenvorrichtung (1), umfassend:
eine Vibrationsrinne (10) zur Aufnahme von Kunststoffgranulat, welche einen Rinnenboden (11) und zwei einander gegenüberliegende Seitenwände (12a, 12b) aufweist, wobei die Länge der Vibrationsrinne (10) in Längsrichtung (a) größer ist, als die maximale Höhe und Breite eines zur Längsrichtung senkrechten Rinnenquerschnitts; und
mindestens zwei Schwingungserreger (20) zur Erzeugung einer Schwingungserregung, welche eine Querkomponente (y) senkrecht zu einer durch die Längsrichtung (a) und Vertikalrichtung (z) gebildeten Ebene aufweist;
**gekennzeichnet durch**
mindestens zwei Rinnenträger (31), die in Längsrichtung (a) der Vibrationsrinne (10) voneinander beabstandet sind, jeweils den Rinnenboden (11) und die Seitenwände (12a, 12b) von außen abstützen und ferner die Vibrationsrinne (10) an der dem Rinnenboden (11) gegenüberliegenden Seite überbrücken,
wobei an mindestens zwei der Rinnenträger (31) jeweils einer der Schwingungserreger (20) befestigt ist.

2. Schwerlast-Wirbelrinnenvorrichtung (1) nach Anspruch 1, **dadurch gekennzeichnet, dass** die Rinnenträger (31) jeweils einen geschlossenen Ring bilden, welcher die Vibrationsrinne (10) radial umgibt.

3. Schwerlast-Wirbelrinnenvorrichtung (1) nach Anspruch 1 oder 2, **dadurch gekennzeichnet, dass** die Vibrationsrinne (10) im Wesentlichen senkrecht durch die Rinnenträger (31) hindurchtritt, so dass die Längsrichtung (a) der Vibrationsrinne (10) mit der Haupterstreckungsebene des jeweiligen Rinnenträgers (31) einen kleinsten Winkel im Bereich von 75° bis 90° einschließt.

4. Schwerlast-Wirbelrinnenvorrichtung (1) nach Anspruch 3, **dadurch gekennzeichnet, dass** die Haupterstreckungsebene des Rinnenträgers (31) eine Vertikalebene (yz) ist.

5. Schwerlast-Wirbelrinnenvorrichtung (1) nach Anspruch 3 oder 4, **dadurch gekennzeichnet, dass** der Rinnenträger (31) eine einstückige Trägerplatte (34) mit konstanter Wanddicke aufweist, in welcher eine Durchtrittsöffnung (33) für die Vibrationsrinne (10) ausgebildet ist.

6. Schwerlast-Wirbelrinnenvorrichtung (1) nach einem der Ansprüche 1 bis 5, **dadurch gekennzeichnet, dass** der Rinnenboden (11) der Vibrationsrinne (10) in Längsrichtung (a) von einem Zufuhrende (14) zu einem Austrittsende (15) hin abfallend geneigt ist, insbesondere mit einem Winkel (α) im Bereich von 2° bis 15° zur einer Horizontalebene (xy) geneigt ist, und/oder
dass der Rinnenquerschnitt zwischen einem Zufuhrende (14) und einem Austrittsende (15) der Vibrationsrinne (10) frei von Stauwehren ist.

7. Schwerlast-Wirbelrinnenvorrichtung (1) nach einem der Ansprüche 1 bis 6, **dadurch gekennzeichnet, dass** benachbarte Rinnenträger (31) durch mindestens drei Längstraversen (32) in Längsrichtung (a) der Vibrationsrinne (10) untereinander verbunden sind.

8. Schwerlast-Wirbelrinnenvorrichtung nach einem der Ansprüche 1 bis 7, **dadurch gekennzeichnet, dass** die Schwingungserreger (20) oberhalb der Vibrationsrinne (10) in einem Bereich über oder seitlich außen neben einer der Seitenwände (12a) derart angeordnet sind, dass die Kraftwirkungslinie (k) der Schwingungserregung des jeweiligen Schwingungserregers (20) mit einem Abstand von maximal 20%, weiter bevorzugt maximal 10% der lichten Weite der Vibrationsrinne (10) zwischen den Seitenwänden (12a, 12b) zur Oberkante (12c) der schwingungserregerseitigen Seitenwand (12a) verläuft.

9. Schwerlast-Wirbelrinnenvorrichtung (1) nach einem der Ansprüche 1 bis 8, **dadurch gekennzeichnet, dass** die Kraftwirkungslinie (k) der Schwingungserregung des jeweiligen Schwingungserregers (20) den Rinnenboden (11) vor der Mitte des Rinnenbodens (11) in Querrichtung (b, y) der Vibrationsrinne (10) schneidet;
und/oder
dass die Kraftwirkungslinie (k) der Schwingungserregung des jeweiligen Schwingungserregers (20) in einer die Querrichtung (b, y) einschließenden Vertikalebene mit dem Rinnenboden (11) einen Winkel (γ) im Bereich von 25° bis 50° einschließt.

10. Schwerlast-Wirbelrinnenvorrichtung (1) nach einem der Ansprüche 1 bis 9, **dadurch gekennzeichnet, dass** der Rinnenboden (11) in der Ebene des Rinnenquerschnitts (bc) einen geraden Abschnitt aufweist, der zu einer Horizontalen (b) in der Ebene des Rinnenquerschnitts (bc) von dem Schwingungserreger (20) weg abfallend geneigt ist, insbesondere zur Horizontalen (b) mit einem Winkel (β) von 2° bis 15° geneigt ist.

11. Schwerlast-Wirbelrinnenvorrichtung (1) nach einem der Ansprüche 1 bis 10, **dadurch gekennzeichnet, dass** der Rinnenboden (11) in Längsrichtung mindestens eine Sicke (11a) aufweist.

12. Schwerlast-Wirbelrinnenvorrichtung (1) nach einem der Ansprüche 1 bis 11, **dadurch gekennzeichnet, dass** die Seitenwände (12a, 12b) der Vibrationsrinne (10) jeweils über einen Krümmungsabschnitt (13a, 13b) in den Rinnenboden (11) übergehen, wobei der Krümmungsradius (rₐ) des Krümmungsabschnitts (13a) auf der Seite der Schwingungserreger (20) größer ist als der Krümmungsradius (r_{b}) des Krümmungsabschnitts (13b) auf der gegenüberliegenden Seite.

13. Schwerlast-Wirbelrinnenvorrichtung (1) nach Anspruch 12, **dadurch gekennzeichnet, dass** das Verhältnis des Krümmungsradius (rₐ) des Krümmungsabschnitts (13a) auf der Seite der Schwingungserreger (20) zu dem Krümmungsradius (r_{b}) des Krümmungsabschnitts (13b) auf der gegenüberliegenden Seite größer als 2, vorzugsweise größer als 5 ist,
und/oder
dass das Verhältnis des Krümmungsradius (rₐ) des Krümmungsabschnitts (13a) auf der Seite der Schwingungserreger (20) zur Breite der Vibrationsrinne (10) zwischen den Seitenwänden (12a, 12b) kleiner als 0,3 und größer als 0,1 ist.

14. Schwerlast-Wirbelrinnenvorrichtung (1) nach einem der Ansprüche 12 oder 13, **dadurch gekennzeichnet, dass** der Krümmungsradius (rₐ) des Krümmungsabschnitts (13a) auf der Seite der Schwingungserreger (20) mindestens ein Viertel der größten Trogtiefe (t) der Vibrationsrinne (10) beträgt.

15. Verfahren zur Kristallisation von zum Verkleben neigendem Kunststoffgranulat, **gekennzeichnet durch** Beschicken der Vibrationsrinne (10) einer Schwerlast-Wirbelrinnenvorrichtung (1) nach einem der vorgenannten Ansprüche mit Kunststoffgranulat, welches bei Zufuhr eine Temperatur oberhalb seiner Glasübergangstemperatur im Bereich seiner Reaktionstemperatur für die Kristallisation aufweist, und
Erregen der Vibrationsrinne (10) mittels der Schwingungserreger (20) derart, dass das Kunststoffgranulat in der Vibrationsrinne (10) einer schraubenförmigen Bewegung unterworfen wird,
wobei die Verweilzeit des Kunststoffgranulats in der Vibrationsrinne 20 bis 60 min. beträgt und die Vibrationsrinne (10) über mindestens 50% ihres Querschnitts mit Kunststoffgranulat gefüllt ist.

## Claims

1. Heavy-duty swirling trough device (1), comprising:
a vibrating trough (10) for receiving plastics granules, which vibrating trough has a trough base (11) and two opposite side walls (12a, 12b), the length of the vibrating trough (10) in the longitudinal direction (a) being greater than the maximum height and width of a trough cross section perpendicular to the longitudinal direction; and
at least two vibration exciters (20) for generating a vibration excitation which has a transverse component (y) perpendicular to a plane formed by the longitudinal direction (a) and vertical direction (z);
**characterized by**
at least two trough supports (31), which are spaced apart from one another in the longitudinal direction (a) of the vibrating trough (10), each support the trough base (11) and the side walls (12a, 12b) from the outside, and also bridge the vibrating trough (10) on the side opposite the trough base (11),
one of the vibration exciters (20) being fastened to at least two of the trough supports (31) in each case.

2. Heavy-duty swirling trough device (1) according to claim 1, **characterized in that** the trough supports (31) each form a closed ring which radially surrounds the vibrating trough (10).

3. Heavy-duty swirling trough device (1) according to either claim 1 or claim 2, **characterized in that** the vibrating trough (10) passes substantially perpendicularly through the trough support (31), so that the longitudinal direction (a) of the vibrating trough (10) and the main extension plane of the relevant trough support (31) enclose a smallest angle in the range from 75° to 90°.

4. Heavy-duty swirling trough device (1) according to claim 3, **characterized in that** the main extension plane of the trough support (31) is a vertical plane (yz).

5. Heavy-duty swirling trough device (1) according to either claim 3 or claim 4, **characterized in that** the trough support (31) has a one-piece support plate (34) with a constant wall thickness, in which a passage opening (33) for the vibrating trough (10) is formed.

6. Heavy-duty swirling trough device (1) according to any of claims 1 to 5, **characterized in that** the trough base (11) of the vibrating trough (10) is inclined in the longitudinal direction (a) from a feed end (14) to an outlet end (15), in particular is inclined at an angle (α) in the range from 2° to 15° with respect to a horizontal plane (xy), and/or
**in that** the trough cross section between a feed end (14) and an outlet end (15) of the vibrating trough (10) is free of barriers.

7. Heavy-duty swirling trough device (1) according to any of claims 1 to 6, **characterized in that** adjacent trough supports (31) are connected to one another by at least three longitudinal members (32) in the longitudinal direction (a) of the vibrating trough (10).

8. Heavy-duty swirling trough device according to any of claims 1 to 7, **characterized in that** the vibration exciters (20) are arranged above the vibrating trough (10) in a region above or laterally outside next to any of the side walls (12a) in such a way that the strain line (k) of the vibration excitation of the relevant vibration exciter (20) extends at a distance of at most 20%, more preferably at most 10%, of the clear width of the vibrating trough (10) between the side walls (12a, 12b) and the upper edge (12c) of the side wall (12a) on the side of the vibration exciter.

9. Heavy-duty swirling trough device (1) according to any of claims 1 to 8, **characterized in that** the strain line (k) of the vibration excitation of the relevant vibration exciter (20) intersects the trough base (11) upstream of the center of the trough base (11) in the transverse direction (b, y) of the vibrating trough (10); and/or
**in that** the strain line (k) of the vibration excitation of the relevant vibration exciter (20) in a vertical plane including the transverse direction (b, y) -encloses an angle (γ) in the range of 25° to 50° with the trough base (11).

10. Heavy-duty swirling trough device (1) according to any of claims 1 to 9, **characterized in that** the trough base (11) has a straight portion in the plane of the trough cross section (bc) which is inclined away from the vibration exciter (20) to a horizontal (b) in the plane of the trough cross section (bc), in particular is inclined to the horizontal (b) at an angle (β) from 2° to 15°.

11. Heavy-duty swirling trough device (1) according to any of claims 1 to 10, **characterized in that** the trough base (11) has at least one bead (11a) in the longitudinal direction.

12. Heavy-duty swirling trough device (1) according to any of claims 1 to 11, **characterized in that** the side walls (12a, 12b) of the vibrating trough (10) each merge into the trough base (11) via a curved portion (13a, 13b), the radius of curvature (rₐ) of the curved portion (13a) on the side of the vibration exciter (20) being greater than the radius of curvature (r_{b}) of the curved portion (13b) on the opposite side.

13. Heavy-duty swirling trough device (1) according to claim 12, **characterized in that** the ratio of the radius of curvature (rₐ) of the curved portion (13a) on the side of the vibration exciter (20) to the radius of curvature (r_{b}) of the curved portion (13b) on the opposite side is greater than 2, preferably greater than 5,
and/or
**in that** the ratio of the radius of curvature (rₐ) of the curved portion (13a) on the side of the vibration exciter (20) to the width of the vibrating trough (10) between the side walls (12a, 12b) is less than 0.3 and greater than 0.1.

14. Heavy-duty swirling trough device (1) according to either claim 12 or claim 13, **characterized in that** the radius of curvature (rₐ) of the curved portion (13a) on the side of the vibration exciter (20) is at least a quarter of the greatest trough depth (t) of the vibrating trough (10).

15. Method for crystallizing plastics granules having a tendency to stick together, **characterized by** loading the vibrating trough (10) of a heavy-duty swirling trough device (1) according to any of the preceding claims with plastics granules which, when fed in, have a temperature above the glass transition temperature thereof in the range of the reaction temperature thereof for crystallization, and
exciting the vibrating trough (10) by means of the vibration exciter (20) in such a way that the plastics granules in the vibrating trough (10) are subjected to a helical movement,
the residence time of the plastics granules in the vibrating trough being 20 to 60 minutes and the vibrating trough (10) being filled with plastics granules over at least 50% of its cross section.

## Revendications

1. Dispositif de canal à tourbillon pour charge lourde (1), comprenant :
un canal de vibration (10) permettant de recevoir des granulés de plastique qui présente un fond de canal (11) et deux parois latérales (12a, 12b) opposées l'une à l'autre, la longueur du canal de vibration (10) dans la direction longitudinale (a) étant supérieure à la hauteur et à la largeur maximales d'une section transversale de canal perpendiculaire à la direction longitudinale ; et
au moins deux excitateurs d'oscillations (20) permettant de générer une excitation d'oscillation qui présente une composante transversale (y) perpendiculaire à un plan formé par la direction longitudinale (a) et la direction verticale (z) ;
**caractérisé par**
au moins deux supports de canal (31) espacés l'un de l'autre dans la direction longitudinale (a) du canal de vibration (10), qui supportent respectivement le fond de canal (11) et les parois latérales (12a, 12b) depuis l'extérieur et qui enjambent en outre le canal de vibration (10) au niveau du côté opposé au fond de canal (11),
respectivement l'un des excitateurs d'oscillations (20) étant fixé à au moins deux des supports de canal (31).

2. Dispositif de canal à tourbillon pour charge lourde (1) selon la revendication 1, **caractérisé en ce que** les supports de canal (31) forment respectivement un anneau fermé qui entoure radialement le canal de vibration (10).

3. Dispositif de canal à tourbillon pour charge lourde (1) selon la revendication 1 ou 2, **caractérisé en ce que** le canal de vibration (10) traverse sensiblement perpendiculairement le support de canal (31), de sorte que la direction longitudinale (a) du canal de vibration (10) comporte un angle le plus petit dans la plage de 75° à 90° avec le plan d'extension principal du support de canal (31) respectif.

4. Dispositif de canal à tourbillon pour charge lourde (1) selon la revendication 3, **caractérisé en ce que** le plan d'extension principal du support de canal (31) est un plan vertical (yz).

5. Dispositif de canal à tourbillon pour charge lourde (1) selon la revendication 3 ou 4, **caractérisé en ce que** le support de canal (31) présente une plaque de support monobloc (34) à épaisseur de paroi constante, dans laquelle une ouverture de passage (33) pour le canal de vibration (10) est formée.

6. Dispositif de canal à tourbillon pour charge lourde (1) selon l'une des revendications 1 à 5, **caractérisé en ce que** le fond de canal (11) du canal de vibration (10) est incliné dans la direction longitudinale (a) à partir d'une extrémité d'introduction (14) jusqu'à une extrémité de sortie (15), en particulier est incliné d'un angle (α) dans la plage de 2° à 15° par rapport à un plan horizontal (xy), et/ou
**en ce que** la section transversale de canal entre une extrémité d'introduction (14) et une extrémité de sortie (15) du canal de vibration (10) est exempte de déversoirs.

7. Dispositif de canal à tourbillon pour charge lourde (1) selon l'une des revendications 1 à 6, **caractérisé en ce que** des supports de canal (31) adjacents sont reliés entre eux par au moins trois traverses longitudinales (32) dans la direction longitudinale (a) du canal de vibration (10).

8. Dispositif de canal à tourbillon pour charge lourde selon l'une des revendications 1 à 7, **caractérisé en ce que** les excitateurs d'oscillations (20) sont disposés au-dessus du canal de vibration (10) dans une zone au-dessus ou latéralement à l'extérieur à côté de l'une des parois latérales (12a), de telle sorte que la ligne d'action (k) de l'excitation d'oscillation de l'excitateur d'oscillations (20) respectif s'étend à une distance d'au plus 20 %, plus préférablement d'au plus 10 %, de la largeur libre du canal de vibration (10) entre les parois latérales (12a, 12b) jusqu'au bord supérieur (12c) de la paroi latérale (12a) côté excitateur d'oscillations.

9. Dispositif de canal à tourbillon pour charge lourde (1) selon l'une des revendications 1 à 8, **caractérisé en ce que** la ligne d'action (k) de l'excitation d'oscillation de l'excitateur d'oscillations (20) respectif coupe le fond de canal (11) avant le centre du fond de canal (11) dans la direction transversale (b, y) du canal de vibration (10) ;
et/ou
**en ce que** la ligne d'action (k) de l'excitation d'oscillation de l'excitateur d'oscillations (20) respectif comporte un angle (γ) dans la plage de 25° à 50° avec le fond de canal (11) dans un plan vertical comportant la direction transversale (b, y).

10. Dispositif de canal à tourbillon pour charge lourde (1) selon l'une des revendications 1 à 9, **caractérisé en ce que** le fond de canal (11) présente une section rectiligne dans le plan de la section transversale de canal (bc), laquelle section rectiligne est inclinée par rapport à une horizontale (b) dans le plan de la section transversale de canal (bc) en s'éloignant de l'excitateur d'oscillations (20), en particulier est inclinée d'un angle (β) de 2° à 15° par rapport à l'horizontale (b).

11. Dispositif de canal à tourbillon pour charge lourde (1) selon l'une des revendications 1 à 10, **caractérisé en ce que** le fond de canal (11) présente au moins une moulure (11a) dans la direction longitudinale.

12. Dispositif de canal à tourbillon pour charge lourde (1) selon l'une des revendications 1 à 11, **caractérisé en ce que** les parois latérales (12a, 12b) du canal de vibration (10) se confondent respectivement dans le fond de canal (11) par l'intermédiaire d'une section de courbure (13a, 13b), le rayon de courbure (rₐ) de la section de courbure (13a) sur le côté de l'excitateur d'oscillations (20) étant supérieur au rayon de courbure (r_{b}) de la section de courbure (13b) sur le côté opposé.

13. Dispositif de canal à tourbillon pour charge lourde (1) selon la revendication 12, **caractérisé en ce que** le rapport du rayon de courbure (rₐ) de la section de courbure (13a) sur le côté de l'excitateur d'oscillations (20) au rayon de courbure (r_{b}) de la section de courbure (13b) sur le côté opposé est supérieur à 2, de préférence supérieur à 5,
et/ou
**en ce que** le rapport du rayon de courbure (rₐ) de la section de courbure (13a) sur le côté de l'excitateur d'oscillations (20) à la largeur du canal de vibration (10) entre les parois latérales (12a, 12b) est inférieur à 0,3 et supérieur à 0,1.

14. Dispositif de canal à tourbillon pour charge lourde (1) selon l'une des revendications 12 ou 13, **caractérisé en ce que** le rayon de courbure (rₐ) de la section de courbure (13a) sur le côté de l'excitateur d'oscillations (20) est d'au moins un quart de la plus grande profondeur d'auge (t) du canal de vibration (10).

15. Procédé destiné à la cristallisation de granulés de plastique ayant tendance à coller, **caractérisé par** le chargement du canal de vibration (10) d'un dispositif de canal à tourbillon pour charge lourde (1) selon l'une des revendications précédentes avec des granulés de plastique qui, lorsqu'ils sont introduits, présentent une température supérieure à leur température de transition vitreuse dans la plage de leur température de réaction pour la cristallisation, et l'excitation du canal de vibration (10) au moyen de l'excitateur d'oscillations (20), de telle sorte que les granulés de plastique dans le canal de vibration (10) sont soumis à un mouvement hélicoïdal,
le temps de séjour des granulés de plastique dans le canal de vibration étant de 20 à 60 minutes et le canal de vibration (10) étant rempli de granulés de plastique sur au moins 50 % de sa section transversale.
